# EUROPEAN PATENT SPECIFICATION

(11) **EP 0 615 689 B1**
(45) Date of publication and mention of the grant of the patent: **27.08.1997**
(21) Application number: 94830017.3
(22) Date of filing: 19.01.1994
(51) Int. Cl.: A21C 9/08, A21C 3/02

(54) **A mechanical device for automatically turning over and stretching preformed dough portions in bread processing and making systems**
Vorrichtung zum Umdrehen und Strecken von vorgeformten Teigteilen
Appareil de retournement et élirage de morceaux de pâte préformés

(30) Priority: 16.03.1993 IT MI930504
(43) Date of publication of application: 21.09.1994
(73) Proprietor: Vismara, Mario Andrea, MC-98000 Principato Di Monaco (MC)
(72) Inventor: Vismara, Mario Andrea, MC-98000 Principato Di Monaco (MC)
(74) Representative: Cicogna, Franco

(56) References cited:
- EP-A- 0 392 584

## Description

### BACKGROUND OF THE INVENTION

The present invention relates to a mechanical device for automatically turning over and stretching preformed dough portions in bread processing and making systems, which has been specifically designed for preparing bread pieces having an elongated and flat shape.

As is known, there are at present broadly used industrial systems for processing and making bread.

These systems usually comprise a plurality of bread processing devices which are cascade arranged and connected to one another by a suitable conveyor belt, some of these devices being specifically designed for processing the comonents for forming the bread dough.

After having prepared the bread dough, the prepared dough is subjected to a natural leavening step, which is followed by a step in which there are prepared dough portions suitably cut and shaped, depending on the specific pieces of bread which must be made.

The last making step of the above mentioned systems is that of introducing the pre-formed bread pieces into baking ovens.

For preparing bread pieces having an elongated and flat shape, more specifically the so-called "slipper" shaped bread pieces, there are at present performed stretching and turning over operations on said bread pieces, before the baking step thereof, said stretching and turning over operations being usually manually performed. EP-A-0 392 584 discloses an apparatus for stretching and turning over dough pieces.

Thus, this operation is a comparatively long one, and necessarily requires an operator for performing it manually.

Moreover, this same operation, as at present performed, also involves serious hygienic problems.

### SUMMARY OF THE INVENTION

Accordingly, the aim of the present invention is to overcome the above mentioned problems and drawbacks, by providing a mechanical device, spefifically designed for application to bread processing systems, which is specifically adapted to automatically turn over and stretch preformed dough pieces.

Within the scope of the above aim, a main object of the present invention is to provide such a device which allows to quickly stretch and turn over preformed bread pieces, under very good hygienic conditions.

Another object of the present invention is to provide such a device which, owing to its constructional features, is very reliable and safe in operation and, moreover, can be easily made starting from easily available elements and materials.

Yet another object of the present invention is to provide such a bread processing device which is very competitive from a mere economic standpoint.

According to one aspect of the present invention, the above mentioned aim and objects, as well as yet other objects, which will become more apparent hereinafter, are achieved by a mechanical device, specifically designed for application to bread processing and making systems, and adapted to automatically turn over and stretch preformed bread dough portions, characterized in that said device comprises a metal frame, which can be affixed to side guide portions of a conveyor belt of said bread processing system, said metal frame being adapted to be rotatively displaced about a pair of pin elements to and from the conveyor belt of said bread processing system, under the control of a hydraulic or pneumatic cylinder, said metal frame supporting a movable conveyor belt which can be reciprocated with reciprocating speeds different from the speed of said conveyor belt of said system.

### BRIEF DESCRIPTION OF THE DRAWINGS

Further characteristics and advantages of the present invention will become more apparent from the following detailed disclosure of a preferred, though not limitative, embodiment thereof, with reference to the accompanying drawings, where:

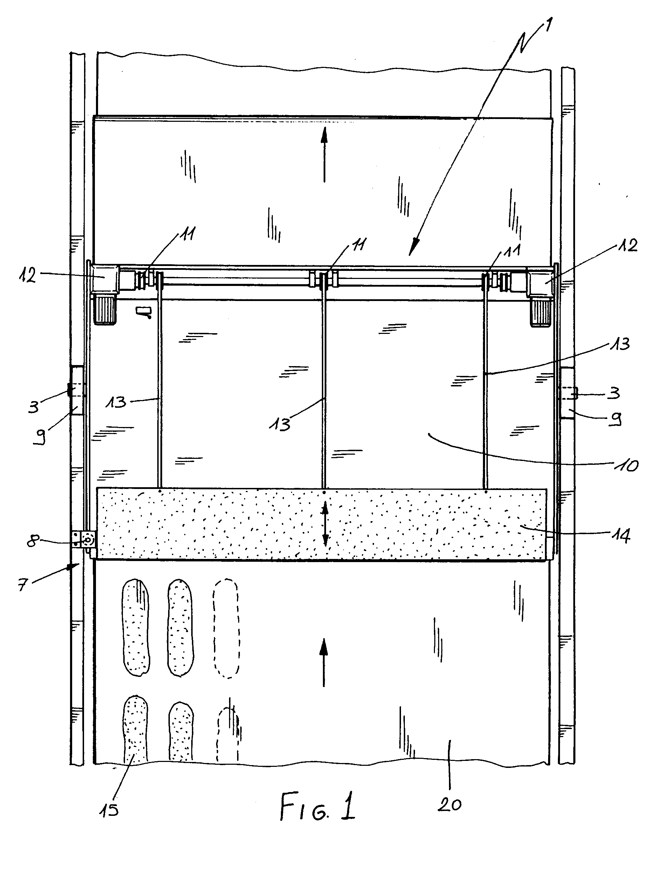

Figure 1 is a top plan view of the mechanical bread processing device according to the present invention;

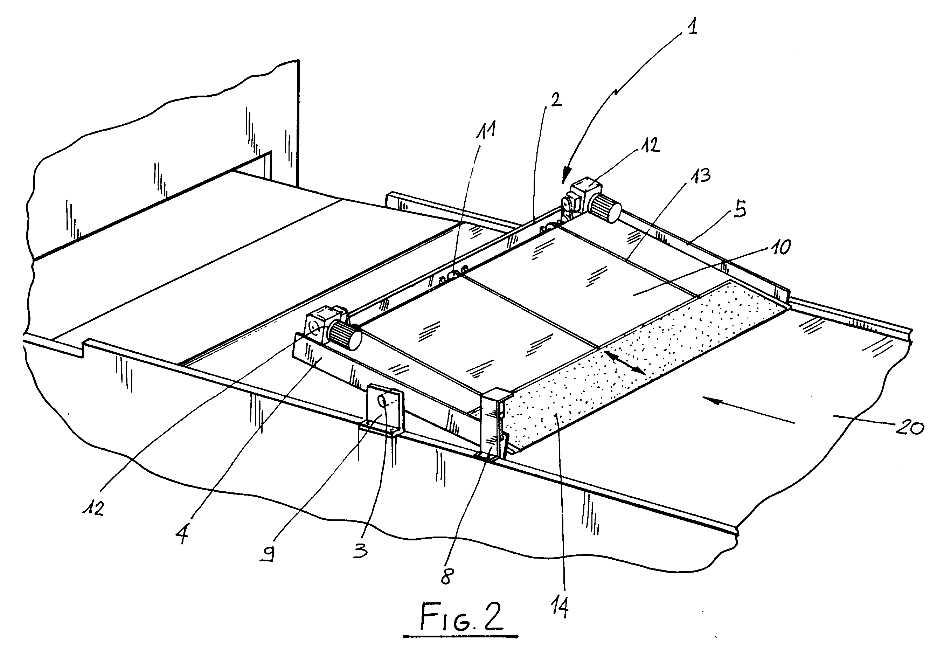

Figure 2 is a perspective view of the device according to the invention, as applied to a conveyor belt;
   and
Figure 3 is a front view of the subject mechanical device for automatically turning over and stretching preformed dough pieces, and showing the device during its main operation steps.

### DESCRIPTION OF THE PREFERRED EMBODIMENT

With reference to the number references of the figures of the accompanying drawings, the mechanical bread processing device according to the invention, which has been generally indicated at the reference number 1, comprises a metal frame or construction 2, which can swing about a pair of pin elements 3 arranged on the central portion of the side edges, indicated at the reference numbers 4 and 5, of the frame 2.

This swinging rotary movement is obtained by a hydraulic or pneumatic cylinder 6, articulated to one end 7 of the frame and also articulated to a side guide of the main conveyor belt 20 of the bread processing system, by means of a suitable supporting element 8.

As shown, the frame 2 is affixed to the guide means of the conveyor belt 1 by means of a pair of side support elements 9, of L shape, thereon there are articulated the above mentioned pin elements 3.

The frame 2 supports furthermore a movable conveyor belt 10, which is driven by means of a plurality of turning rollers 11, in turn driven by a pair of reducing units 12 arranged at the side end portions of the frame 2.

More specifically, the mentioned turning rollers 11 drive a plurality of belt elements 13, suitably affixed to the mentioned conveyor belt 10.

Moreover, to one end of the frame 2 there is connected a metal plate 14 which always contacts, by an end portion thereof, the above mentioned main conveyor belt 20.

A main feature of the present invention is that the conveyor belt 10 can be displaced with a reciprocating movement, by suitably reversing the turning movement of the turning rollers 11 under the control of the driving-reducing units 12.

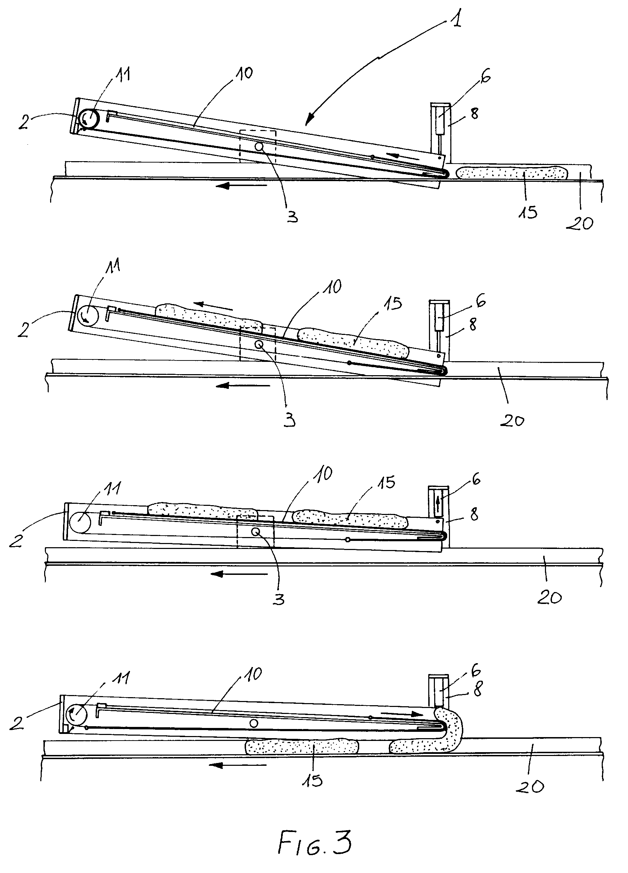

Actually, as is clearly shown in Figure 3, illustrating the main steps of operation of the device 1, at a starting step the pre-formed bread dough portions 15, arranged on the main conveyor belt 20, contact the plate 14 connected to the frame 2 and a preset number of these bread dough pieces are loaded on the belt 10 which is driven in the same direction of the above mentioned main conveyor belt 20.

After having loaded the dough pieces, the conveyor belt 10 is caused to stop and the hydraulic or pneumatic cylinder 6 is automatically operated so as to cause the frame 2 of the device 1 to progressively turn about the pin elements 3, in particular from a slanted position to a position which is substantially parallel to the main conveyor belt 20.

Then, the conveyor belt 10, or secondary conveyor belt, is driven again in an opposite direction by the driving-reducing units 12, which drive the belt elements 13, the direction of movement of the belt 10 being opposite to the direction of movement of the main conveyor belt 20.

Accordingly, the dough pieces 15 are automatically caused to fall and turn over, from the conveyor belt 10 to the main conveyor belt 20.

Furthermore, because of the different speeds of the above mentioned conveyor belts 10 and 20, the dough pieces 15 are subjected to a stretching action.

In fact, more specifically, each dough piece will be displaced, by falling, from the conveyor belt 10 to the main conveyor belt 20 which is driven with a speed which is much greater than that of the belt 10.

From the above disclosure it should be apparent that the invention fully achieves the intended aim and objects.

In particular, the fact is to be pointed out that the turning over of the dough pieces, performed by the subject device, allows the dough pieces to be perfectly cooked from both sides thereof, so as to provide an outer crust providing the bread pieces with very good characteristics.

Moreover, this stretching and turning over allows to provide the bread pieces with inner cells of greater depth and allows moreover to make a product of a larger size.

The thus made bread, moreover, will have a better outer aspect.

The invention as disclosed is susceptible to several variations and modifications all of which will come within the scope of the invention, as defined in the claims.

Moreover, all of the details can be replaced by other technically equivalent elements.

In practicing the invention, the used materials, provided that they are compatible to the intended use, as well as the contingent size and shapes can be any according to requirements.

## Claims

1. A mechanical device, specifically designed for application to bread processing and making systems, and adapted to automatically turn over and stretch preformed bread dough portions, characterized in that said device comprises a metal frame (2), which can be affixed to side guide portions of a conveyor belt (20) of said bread processing system, said metal frame being adapted to be rotatively displaced about a pair of pin elements to and from the conveyor belt of said bread processing system, under the control of a hydraulic or pneumatic cylinder (6), said metal frame supporting a movable conveyor belt (10) which can be reciprocated with reciprocating speeds different from the speed of said conveyor belt (20) of said system.

2. A mechanical device, according to Claim 1, characterized in that said pair of pin elements (3) are arranged on the central portion of the side edges of said frame (2).

3. A mechanical device, according to Claims 1 and 2, characterized in that said frame (2) is anchored to the guide means of the conveyor belt by means of a pair of side supporting elements (9), of L shape, thereon said pin elements (3) are pivoted.

4. A mechanical device, according to one or more of the preceding claims, characterized in that said hydraulic or pneumatic cylinder (6) is articulated to one end of said frame (2) and is anchored to the side guide means of said conveyor belt (20) by a suitable supporting element (8).

5. A mechanical device, according to one or more of the preceding claims, characterized in that said conveyor belt (10) is driven by a plurality of turning rollers (11), in turn driven by a pair of driving reducing units arranged at the side ends of said frame.

6. A mechanical device according to claim 5, characterized in that said rollers (11) drive a plurality of belt elements affixed to said conveyor belt.

7. A mechanical device according to one or more of the preceding claims, characterized in that to one end of said frame (2) there is further affixed a metal plate (14).

## Patentansprüche

1. Mechanische Vorrichtung, insbesondere ausgelegt für die Anwendung bei Brotbearbeitungs- und Herstellsystemen, und dafür vorgesehen, vorgeformte Brotteigteile automatisch umzudrehen und zu strecken,
**dadurch gekennzeichnet,** daß
die Vorrichtung einen Metallrahmen (2) aufweist, welcher an Seitenführungsabschnitten eines Förderbandes (20) des Brotbearbeitungssystems anbringbar ist, wobei der Metallrahmen dafür vorgesehen ist, um ein Paar von Stiftelementen drehbar in seiner Lage verändert werden zu können, und zwar zu und von dem Förderband des Brotbearbeitungssystems, unter der Steuerung eines hydraulischen oder pneumatischen Zylinders (6), wobei der Metallrahmen ein bewegliches Förderband (10) trägt, welches mit wechselnden Geschwindigkeiten hin- und herbewegbar ist, welche unterschiedlich sind von deren Geschwindigkeit des Förderbandes (20) des Systems.

2. Mechanische Vorrichtung gemäß Anspruch 1,
**dadurch gekennzeichnet,** daß
das Paar von Stiftelementen (3) an dem mittleren Abschnitt der Seitenränder des Rahmens (2) angeordnet sind.

3. Mechanische Vorrichtung gemäß Anspruch 1 und 2,
**dadurch gekennzeichnet,** daß
der Rahmen (2) an den Führungseinrichtungen des Förderbandes durch ein Paar von L-förmigen Seitentragelementen (9) verankert ist, auf welchen die Stiftelemente (3) drehbar angeordnet sind.

4. Mechanische Vorrichtung gemäß einem oder mehreren der vorhergehenden Ansprüche,
**dadurch gekennzeichnet,** daß
der hydraulische oder pneumatische Zylinder (6) mit einem Ende des Rahmens (2) gelenkig verbunden ist und an den Seitenführungseinrichtungen des Förderbandes (20) durch ein geeignetes Stützelement (8) verankert ist.

5. Mechanische Vorrichtung gemäß einem oder mehreren der vorhergehenden Ansprüche,
**dadurch gekennzeichnet,** daß
das Förderband (10) durch eine Vielzahl von Drehrollen (11) angetrieben ist, welche wiederum durch ein Paar von Antriebsreduziereinheiten angetrieben ist, welche an den seitlichen Rändern des Rahmens angebracht sind.

6. Mechanische Vorrichtung nach Anspruch 5,
**dadurch gekennzeichnet,** daß
die Rollen (11) eine Vielzahl von Riemenelementen antreiben, welche an dem Förderband angebracht sind.

7. Mechanische Vorrichtung nach einem oder mehreren der vorhergehenden Ansprüche,
**dadurch gekennzeichnet,** daß
an einem Ende des Rahmens (2) weiterhin eine Metallplatte (14) angebracht ist.

## Revendications

1. Appareil mécanique, conçu spécialement pour être utilisé avec des systèmes de traitement et de fabrication du pain et adapté pour le retournement et l'étirage automatiques de morceaux de pâte à pain préformés, caractérisé en ce que ledit appareil comporte un cadre métallique (2) qui peut être fixé à des éléments de guidage latéraux d'une bande transporteuse (20) dudit système de traitement du pain, ledit cadre métallique étant agencé pour être mobile en rotation autour d'une paire d'éléments à broches par un mouvement alternatif par rapport à la bande transporteuse dudit système de traitement du pain, commandé par un cylindre hydraulique ou pneumatique (6), ledit cadre métallique supportant une bande transporteuse (10) mobile qui peut avoir un mouvement alternatif avec des vitesses alternatives différentes de la vitesse de ladite bande transporteuse dudit système.

2. Appareil mécanique, selon la revendication 1, caractérisé en ce que ladite paire d'éléments à broches (3) est agencée sur la partie centrale des bords latéraux dudit cadre (2).

3. Appareil mécanique, selon les revendications 1 et 2, caractérisé en ce que ledit cadre (2) est ancré aux moyens de guidage de la bande transporteuse à l'aide d'une paire d'éléments d'appui latéraux (9) en forme de "L", sur lesquels pivotent lesdits éléments à broches (3).

4. Appareil mécanique, selon une ou plusieurs des revendications précédentes, caractérisé en ce que ledit cylindre hydraulique ou mécanique (6) est articulé vers une extrémité dudit cadre (2) et ancré aux moyens de guidage latéraux de ladite bande transporteuse (20) à l'aide d'un élément d'appui (8) approprié.

5. Appareil mécanique, selon une ou plusieurs des revendications précédentes, caractérisé en ce que ladite bande transporteuse (10) est entraînée par une pluralité de galets de roulement (11), entraînés à leur tour par une paire d'ensembles réducteurs d'entraînement agencés aux extrémités latérales dudit cadre.

6. Appareil mécanique, selon la revendication 5, caractérisé en ce que lesdits galets (11) entraînent une pluralité d'éléments de bande fixés à ladite bande transporteuse.

7. Appareil mécanique, selon une ou plusieurs des revendications précédentes, caractérisé en ce qu'une plaque métallique (14) est fixée à une extrémité dudit cadre (2).
